# EUROPÄISCHE PATENTSCHRIFT

(11) **EP 2 624 231 B1**
(45) Veröffentlichungstag und Bekanntmachung des Hinweises auf die Patenterteilung: **24.09.2014**
(21) Anmeldenummer: 12153628.8
(22) Anmeldetag: 02.02.2012
(51) Int. Cl.: G07B 15/06, G08G 1/01, G08G 1/017, G08G 1/054, G08G 1/015, G08G 1/00

(54) **Vorrichtungen und Verfahren zur Kontrolle in einem Straßenmautsystem**
Devices and method for controlling a road toll system
Dispositifs et procédé de contrôle d'un système de péage routier

(43) Veröffentlichungstag der Anmeldung: 07.08.2013
(73) Patentinhaber: Kapsch TrafficCom AG, 1120 Wien (AT)
(72) Erfinder: Leopold, Alexander, 1100 Wien (AT); Bäck, Joachim, 1160 Wien (AT); Nagy, Oliver, 1190 Wien (AT)
(74) Vertreter: Weiser, Andreas

(56) Entgegenhaltungen:
- EP-A2- 1 170 702
- EP-A2- 1 783 692
- WO-A1-2011/129800
- DE-A1-102005 058 033
- US-A1- 2006 064 345

## Beschreibung

Die vorliegende Erfindung betrifft Vorrichtungen und Verfahren zur Kontrolle in einem Straßenmautsystem, das auf von Fahrzeugen mitgeführten Onboard-Units basiert.

In modernen Straßenmautsystemen werden mautpflichtige Fahrzeuge mit Onboard-Units (OBUs) ausgestattet, mit deren Hilfe die Fahrzeuge verortet und in der Folge ihre Straßennutzungen vermautet (vergebührt) werden können. Die OBUs können von verschiedenster Art sein: Einerseits können die OBUs von "selbst-verortendem" Typ sein, d.h. ihren Ort fortlaufend selbst bestimmen, z.B. mittels eines Satellitennavigationsempfängers im Rahmen eines Satellitennavigationssystems (global navigation satellite system, GNSS), und die so ermittelten Orte ("position fixes") entweder direkt einer Zentrale des Straßenmautsystems melden, sei es über ein Mobilfunknetz oder ein Netz geographisch verteilter Funkbaken, oder in Form "abstrahierter", aus den Ortsmeldungen berechneter Mauttransaktionen. Alternativ könnten solche GNSS-OBUs ihre Ortsmeldungen oder Mauttransaktionen einfach speichern oder daraus berechnete Gebühren von einem internen Mautguthaben abbuchen. Anderseits können die OBUs von "fremd-verortetem" Typ sein, beispielsweise mit Hilfe einer Vielzahl geographisch über das Straßenmautsystem verteilter Maut- bzw. Funkbaken, welche jeweils Kurzreichweiten- bzw. DSRC-Funkkommunikationen (dedicated short range communications) mit passierenden OBUs aufnehmen und aufgrund ihrer begrenzten Kommunikationsreichweite diese damit auf ihren bekannten Bakenort lokalisieren. Entsprechende Ortsmeldungen bzw. daraus berechnete Mauttransaktionen können dann von den OBUs oder den Mautbaken erzeugt und entweder in den OBUs oder in der Zentrale verarbeitet werden.

Die Schrift EP 1 783 692 A2 beschreibt ein Verfahren zur Feststellung und Ahndung von Mautdelikten mittels eines mobilen Kontrollfahrzeuges, das ein Terminal zur manuellen Kennzeicheneingabe eines zu kontrollierenden Fahrzeuges hat und mit der OBU dieses Fahrzeuges kommunizieren und gegebenenfalls zusätzliche Daten einer Zentrale abrufen kann, um ein Delikt im Kontrollfahrzeug festzustellen.

Aus der WO 2011/129800 A1 ist ein System zur Feststellung und Ahndung von allgemeinen Verkehrsdelikten bekannt, bei dem die OBUs aller Fahrzeuge durch eine drahtlose Verbindung kontinuierlich Informationen über ihre Position, Geschwindigkeit usw. an eine Zentrale übermitteln, welche die übermittelten Daten bezüglich Geschwindigkeitsübertretungen, Parkzeitüberschreitungen usw. auswertet. Wird in der Zentrale ein Delikt festgestellt, werden die aktuellen Positionsdaten der OBU an ein dieses Gebiet überwachendes Kontrollfahrzeug gesendet, damit dieses das Delikt ahnden kann.

Die Erfindung setzt sich zum Ziel, neuartige Kontrollvorrichtungen und -verfahren zur Feststellung und Ahndung (Enforcement) von Verkehrs- oder Mautdelikten in solchen Straßenmautsystemen zu schaffen.

Dieses Ziel wird in einem ersten Aspekt der Erfindung mit einer Kontrollvorrichtung der eingangs genannten Art erreicht, umfassend:
zumindest ein Aufzeichnungsfahrzeug und zumindest ein Kontrollfahrzeug, die jeweils eine Leseeinrichtung zum Kennzeichenlesen einer Kennzeichentafel des Fahrzeugs aufweisen und drahtlos mit einem zentralen Deliktserver in Verbindung stehen,
wobei das Aufzeichnungsfahrzeug dafür ausgebildet ist, ein Verkehrs- oder Mautdelikt einer Onboard-Unit oder eines diese mitführenden Fahrzeugs zu detektieren und, im Deliktfall, einen Deliktdatensatz mit Deliktort und Kennzeichenleseergebnis des Fahrzeugs an den Deliktserver zu senden,
wobei der Deliktserver dafür ausgebildet ist, Kontrollfahrzeuge mit Positionen oder deren Umgebungen zu registrieren und Deliktdatensätze, deren Deliktorte in die Umgebung um eine Position fallen, einem mit dieser Position bzw. Umgebung registrierten Kontrollfahrzeug bereitzustellen, und
wobei das Kontrollfahrzeug dafür ausgebildet ist, seine Position oder Umgebung im Deliktserver zu registrieren sowie zu einem von seiner Leseeinrichtung gelesenen Kennzeichen einen vom Deliktserver bereitgestellten Deliktdatensatz zu ermitteln und, wenn ein solcher vorhanden, eine Alarmmeldung auszugeben.

In einem zweiten, dritten und vierten Aspekt schafft die Erfindung Aufzeichnungsfahrzeuge, Deliktserver und Kontrollfahrzeuge, welche sich durch die genannten Komponenten und Funktionalitäten auszeichnen.

In einem fünften Aspekt schafft die Erfindung ein Verfahren zur Kontrolle in einem Straßenmautsystem, das auf von Fahrzeugen mitgeführten Onboard-Units basiert, unter Verwendung zumindest eines Aufzeichnungsfahrzeugs und zumindest eines Kontrollfahrzeug, die drahtlos mit einem zentralen Deliktserver kommunizieren können, umfassend:
im Aufzeichnungsfahrzeug:
   - Detektieren eines Verkehrs- oder Mautdelikts einer Onboard-Unit oder eines diese mitführenden Fahrzeugs und, im Deliktfall,
   - Senden eines Deliktdatensatzes mit einem ermittelten Deliktort und einem gelesenen Kennzeichen des Fahrzeugs an den Deliktserver;
im Deliktserver:
   - Registrieren von Kontrollfahrzeugen mit Positionen oder deren Umgebungen,
   - Empfangen von Deliktdatensätzen von Aufzeichnungsfahrzeugen und, wenn deren Deliktorte in die Umgebung um eine Position fallen,
   - Bereitstellen dieser Deliktdatensätze einem mit dieser Position bzw. Umgebung registrierten Kontrollfahrzeug;
im Kontrollfahrzeug:
   - Registrieren seiner Position oder Umgebung im Deliktserver,
   - Kennzeichenlesen einer Kennzeichentafel eines passierenden Fahrzeugs,
   - Ermitteln, zu einem gelesenen Kennzeichen, eines vom Deliktserver bereitgestellten Deliktdatensatzes und, wenn ein solcher vorhanden,
   - Ausgeben einer Alarmmeldung.

Die Erfindung beruht auf dem neuartigen Ansatz eines verteilten Kontrollsystems, welches sich aus einer ersten Flotte von Aufzeichnungsfahrzeugen ("Jägern") und einer zweiten Flotte von Kontrollfahrzeugen ("Sammlern") zusammensetzt, die über einen gemeinsamen Deliktserver miteinander kommunizieren. Die "Jäger" sind gut ausgerüstet zur automatischen Delikterkennung und brauchen für Deliktfahrzeuge keine weiteren Veranlassungen zu treffen als die Erzeugung von Deliktdatensätzen; ihre Interaktionen mit den kontrollierten Fahrzeugen sind kurz, sie können sich dadurch schnell bewegen, auch Fahrzeuge mit hoher Geschwindigkeit oder im Gegenverkehr kontrollieren und gering in ihrer Anzahl gehalten werden, was die Gesamtausrüstungskosten in Grenzen hält. Die "Sammler" benötigen vergleichsweise geringe Ausrüstung, da sie keine Delikte feststellen, sondern lediglich Fahrzeugkennzeichen lesen, zugehörige Deliktdatensätze suchen und bei Deliktfahrzeugen Alarm geben. Die Besatzung des Kontrollfahrzeugs kann dann z.B. eine Anhaltung des Deliktfahrzeugs und eine manuelle Kontrolle vor Ort durchführen. Aufgrund ihrer geringen Ausrüstungserfordernisse können Kontrollfahrzeuge (Sammler) in großer Zahl vorgesehen werden und dadurch im einzelnen auch zeitaufwendige Vor-Ort-Kontrollen durchführen. Beispielsweise können bestehende Flotten von Spezialfahrzeugen wie Einsatzfahrzeuge, öffentliche Verkehrsmittel, Taxis usw. zu Kontrollfahrzeugen umgerüstet werden und ihre Kontrollfunktionen mobil im fließenden und stationär im ruhenden Verkehr ausüben, während einige wenige komplexe Aufzeichnungsfahrzeuge (Jäger) sich ständig hochmobil im Fließverkehr bewegen und Deliktdatensätze generieren. Im Ergebnis können automatische Kontrollen von Onboard-Units selbst in großräumigen, weit verzweigten und mit Hochgeschwindigkeits- und Gegenverkehrsstrecken versehenen Straßennetzen durchgeführt werden.

Die Vorrichtungen und Verfahren der Erfindung sind sowohl für (DSRC-)OBUs vom fremd-verorteten Typ geeignet, die bereits eine DSRC-Funkschnittstelle haben, als auch für (GNSS-)OBUs vom selbst-verortenden Typ, welche zusätzlich eine DSRC-Funkschnittstelle für Kontroll- und Einstellungszwecke haben.

Bevorzugt werden wesentlich mehr Kontrollfahrzeuge vorgesehen als Aufzeichnungsfahrzeuge, insbesondere bevorzugt um mindestens eine Zehnerpotenz mehr.

Die vom Aufzeichnungsfahrzeug detektierten Delikte können alle Arten von Maut- oder Verkehrsdelikten sein, welche automatisch detektierbar sind, beispielsweise Geschwindigkeitsübertretungen detektiert mit Hilfe einer Geschwindigkeitsmesseinrichtung des Aufzeichnungsfahrzeugs, Fahrverbote (auch zeitbezogene) detektiert mit Hilfe einer Fahrzeugdetektionseinrichtung des Aufzeichnungsfahrzeugs, usw. Bevorzugt sind die Delikte Mautdelikte, und insbesondere bevorzugt solche, die anhand eines aus der Onboard-Unit über die DSRC-Funkschnittstelle auslesbaren Mautparameters festgestellt werden können: Solche Mautparameter können beliebiger Art sein und z.B. über Einsatzzweck des Fahrzeugs (z.B. Einsatzfahrzeug, öffentliches Verkehrsmittel, Privatfahrzeug, Lastkraftwagen usw.), Status des Benutzers des Fahrzeugs, über Größe, Gewicht, Schadstoffklasse, Anzahl der Achsen des Fahrzeugs oder die Beziehung zwischen (nutzerspezifischer) Onboard-Unit und physischem Fahrzeug (z.B. über die Nummerntafeln referenziert) usw. Auskunft geben. Bei jeder Berechnung einer Maut, sei es bei einer Kommunikation mit einer Mautbake oder bei der Berechnung von Mauttransaktionen aus Ortsmeldungen, wird auf die Mautparameter der OBU zurückgegriffen, um die Höhe der Maut - oder überhaupt die Mautpflicht - zu ermitteln.

Eine bevorzugte Ausführungsform der Erfindung zeichnet sich demgemäß dadurch aus, dass das Detektieren im Aufzeichnungsfahrzeug durch Auslesen zumindest eines Mautparameters aus der Onboard-Unit über die DSRC-Funkschnittstelle und Überprüfen des Mautparameters auf Korrektheit erfolgt.

In noch einem weiteren Aspekt befasst sich die Erfindung speziell mit der Kontrolle fahrzeugformspezifischer Mautparameter: Solche fahrzeugformspezifische Parameter, welche die Höhe einer zu entrichtenden Straßenmaut bestimmen, können beispielsweise die Abmessungen des Fahrzeugs, seine aktuelle Achsanzahl (mit oder ohne Anhänger), eine bestimmte Karosserieform wie LKW oder PKW usw. sein und als Mautparameter in einer Onboard-Unit eingestellt oder gespeichert sein. Um missbräuchliche Fehleinstellungen solcher Mautparameter zu detektieren, weist das Aufzeichnungsfahrzeug einen DSRC-Sendeempfänger zum Auslesen des Mautparameters eines passierenden Fahrzeugs und einen Sensor zum Erfassen eines Formparameters des Fahrzeugs auf, wobei das Aufzeichnungsfahrzeug dafür ausgebildet ist, den Mautparameter auf Konsistenz mit dem Formparameter zu prüfen und bei Inkonsistenz den Deliktdatensatz mit Deliktort und Kennzeichenleseergebnis des Fahrzeugs an den Deliktserver zu senden.

Alternativ oder zusätzlich kann das Aufzeichnungsfahrzeug mit einer Einrichtung zur Messung von Geschwindigkeit und bevorzugt Fahrtrichtung eines passierenden Fahrzeugs ausgestattet sein, um das Verkehrs- oder Mautdelikt auch auf Grundlage dieser Messwerte zu bestimmen.

Wie erörtert können der erfasste Formparameter und der ausgelesene Mautparameter bevorzugt Fahrzeuglänge oder Achsanzahl sein, insbesondere nach Klassen unterteilt ("klassifiziert"). Der Formparameter eines zu kontrollierenden Fahrzeugs kann dabei auf verschiedenste Arten erfasst werden, beispielsweise mit Hilfe einer elektronischen Kamera mit Objekterkennungssoftware, mit Hilfe eines Radardetektors zur Fahrzeugvermessung oder Detektion seiner Räder, oder bevorzugt mit Hilfe eines Laserentfernungsmessers oder Laserscanners, welcher zumindest einen Teil der Form des Fahrzeugs durch Abtasten während der Passage erfasst: Durch die Relativbewegung zwischen Aufzeichnungsfahrzeug und kontrolliertem Fahrzeug kann ein 2D-oder 3D-Abbild (Profil oder "Punktewolke" von Laserentfernungsmeßpunkten) zumindest eines Teils des Fahrzeugs erstellt und daraus der Formparameter gewonnen werden, z.B. durch Objekterkennungssoftware, beispielsweise als Fahrzeuglänge oder Achsanzahl, woraus z.B. auf eine bestimmte Fahrzeugklasse (PKW, LKW, LKW mit Anhänger, usw.) geschlossen werden kann.

Das Aufzeichnungsfahrzeug kann den Deliktort selbst bestimmen, z.B. mittels eines Satellitennavigationsempfängers, oder von der kontrollierten Onboard-Unit selbst empfangen, z.B. wenn diese eine eigene Positionsbestimmungseinrichtung aufweist oder ihren Ort auf andere Weise, z.B. von einer ortsfesten Funkbake, erfährt.

Besonders günstig ist es, wenn das Aufzeichnungsfahrzeug mit einer Einrichtung zur Messung von Geschwindigkeit und bevorzugt Fahrtrichtung eines passierenden Fahrzeugs ausgestattet ist und diese Messwerte in den Deliktdatensatz aufnimmt. Der Deliktserver kann in diesem Fall auch dafür ausgebildet sein, aus den genannten Messwerten eine zeitliche Veränderung des Deliktorts zu extrapolieren, um diese bei der Überprüfung, ob ein Deliktort in die Umgebung einer Position zu einem Zeitpunkt fällt, zu berücksichtigen. Dadurch kann die Aufgriffswahrscheinlichkeit eines Deliktfahrzeugs durch ein Kontrollfahrzeug erhöht werden, indem Schätzungen der Bewegungen der Deliktfahrzeuge erzeugt und mit den Positionen der Kontrollfahrzeuge abgestimmt werden.

Gemäß einem weiteren Merkmal der Erfindung kann der Deliktdatensatz auch einen Zeitstempel enthalten und der Deliktserver dafür ausgebildet sein, nur Deliktdatensätze innerhalb eines vorgegebenen Zeitraums zu berücksichtigen. Alternativ oder zusätzlich kann das Kontrollfahrzeug dafür ausgebildet sein, Deliktdatensätze mit einem außerhalb eines vorgegebenen Zeitbereichs liegenden Zeitstempel zu verwerfen. Dadurch können alte Deliktdatensätze automatisch ausgeschieden werden.

Weitere Merkmale und Vorteile der Erfindung ergeben sich aus der nachfolgenden Beschreibung eines bevorzugten Ausführungsbeispiels, welches auf die begleitenden Zeichnungen Bezug nimmt, in denen zeigen:
Fig. 1 die Funktionsweise der Kontrollvorrichtungen und des Kontrollverfahrens der Erfindung in einer Fahrzeugpopulation eines Straßennetzes schematisch im Überblick;
die Fig. 2a und 2b verschiedene Vorrichtungskomponenten und Verfahrensschritte bei der Passage eines zu kontrollierenden Fahrzeugs an einem Aufzeichnungsfahrzeug;
die Fig. 3a und 3b verschiedene Vorrichtungskomponenten und Verfahrensschritte bei der Passage eines zu kontrollierenden Fahrzeugs an einem Kontrollfahrzeug;
Fig. 4 ein Flussdiagramm des im Aufzeichnungsfahrzeug ablaufenden Verfahrensteils; und
Fig. 5 ein Flussdiagramm der im Deliktserver und im Kontrollfahrzeug ablaufenden Verfahrensteile.

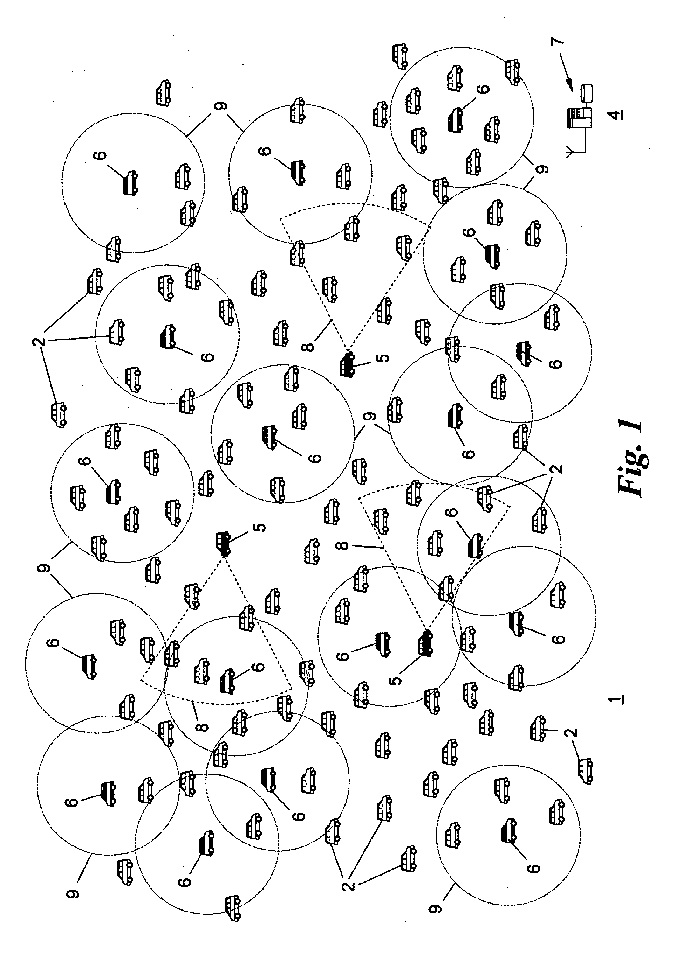

Fig. 1 zeigt schematisch ein Straßenmautsystem 1, in dessen Rahmen sich eine Vielzahl mautpflichtiger Fahrzeuge 2 auf einem nicht näher dargestellten, z.B. landesweiten Straßennetz bewegen. Das Straßenmautsystem 1 dient dazu, beliebige Straßennutzungen der Fahrzeuge 2 zu vermauten (vergebühren), und zwar sowohl Nutzungen von Verkehrsflächen des fließenden Verkehrs in Form von z.B. Wege-, Gebiets-, Übertritts- oder Grenzmaut als auch von Verkehrsflächen des ruhenden Verkehrs in Form von z.B. Aufenthalts- oder Parkgebühren.

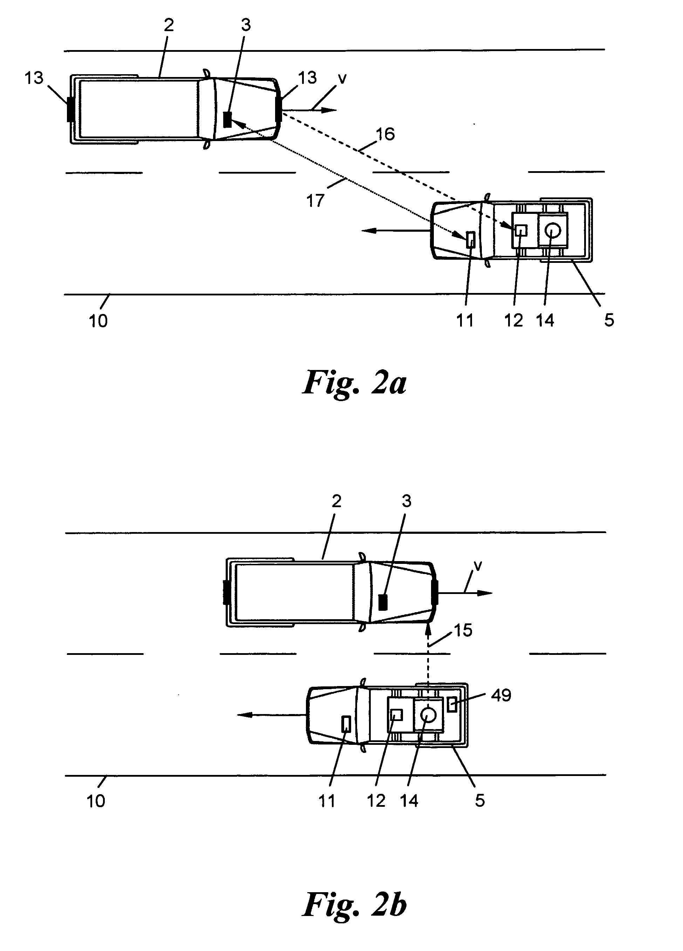

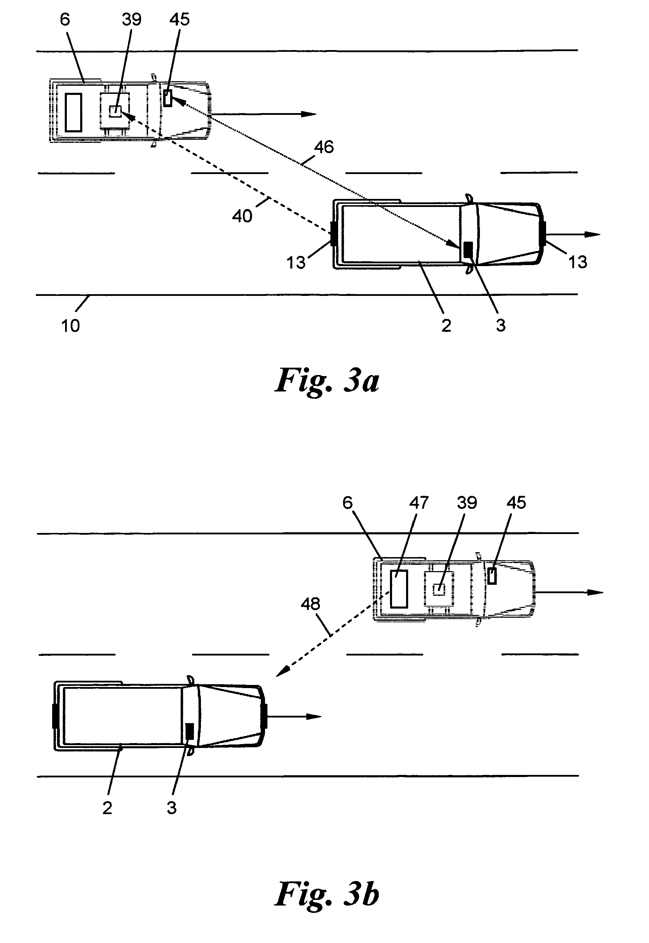

Zu diesem Zweck sind gemäß den Fig. 2 und 3 alle mautpflichtigen Fahrzeuge 2 mit Onboard-Units (OBUs) 3 ausgestattet, mit deren Hilfe die Fahrzeuge 2 verortet und in der Folge vermautet werden können. Die OBUs 3 können von verschiedenster Art sein: Einerseits können die OBUs 3 von "selbst-verortendem" Typ sein, d.h. ihren Ort fortlaufend selbst bestimmen, z.B. mittels eines Satellitennavigationsempfängers im Rahmen eines Satellitennavigationssystems (global navigation satellite system, GNSS), und die so ermittelten Orte ("position fixes") entweder direkt einer Zentrale 4 des Straßenmautsystems 1 melden, sei es über ein Mobilfunknetz oder ein Netz geographisch verteilter Funkbaken, oder in Form "abstrahierter", aus den Ortsmeldungen berechneter Mauttransaktionen. Alternativ könnten solche GNSS-OBUs 3 ihre Ortsmeldungen oder Mauttransaktionen einfach speichern oder daraus berechnete Gebühren von einem internen Mautguthaben abbuchen. Anderseits können die OBUs 3 von "fremd-verortetem" Typ sein, beispielsweise mit Hilfe einer Vielzahl geographisch über das Straßenmautsystem 1 verteilter Maut- bzw. Funkbaken, welche jeweils Kurzreichweiten- bzw. DSRC-Funkkommunikationen (dedicated short range communications) mit passierenden OBUs 3 aufnehmen und aufgrund ihrer begrenzten Kommunikationsreichweite diese damit auf ihren bekannten Bakenort lokalisieren. Entsprechende Ortsmeldungen bzw. daraus berechnete Mauttransaktionen können dann von den OBUs 3 oder den Mautbaken erzeugt und entweder in den OBUs 3 oder in der Zentrale 4 verarbeitet werden.

Zur korrekten Mautberechnung im Straßenmautsystem 1 werden in den OBUs 3 jeweils ein oder mehrere für das jeweilige Fahrzeug 2 spezifische Mautparameter OC eingestellt oder gespeichert. Die Mautparameter OC können beliebiger Art sein und z.B. über Einsatzzweck des Fahrzeugs 2 (z.B. Einsatzfahrzeug, öffentliches Verkehrsmittel, Privatfahrzeug, Lastkraftwagen usw.), Status des Benutzers des Fahrzeugs 2, über Größe, Gewicht, Schadstoffklasse, Anzahl der Achsen des Fahrzeugs 2 mit oder ohne Anhänger usw. Auskunft geben. Bei jeder Berechnung einer Maut, sei es bei einer Kommunikation mit einer Mautbake oder bei der Berechnung von Mauttransaktionen aus Ortsmeldungen, wird auf die Mautparameter OC der OBU 3 zurückgegriffen, um die Höhe der Maut - oder überhaupt die Mautpflicht - zu ermitteln.

Im weiteren werden hier solche Mautparameter OC betrachtet, die durch eine Überprüfung des äußeren Erscheinungsbilds, d.h. der Form des Fahrzeugs 2, welches die OBU 3 mitführt, validiert (gegengeprüft) werden können. Solche Mautparameter OC werden hier als fahrzeugformspezifisch bezeichnet. Fahrzeugformspezifische Mautparameter OC können z.B. eine oder mehrere Abmessungen des Fahrzeugs 2, seine Karosserieform (Kastenaufbau, Pritschenaufbau, PKW- oder LKW-Aufbau), Anzahl der Achsen, Anzahl der Anhänger usw. sein.

Die im weiteren beschriebenen Kontrollvorrichtungen und -verfahren sind für solche OBUs 3 geeignet, deren darin eingestellte bzw. gespeicherte fahrzeugformspezifische Mautparameter OC über eine DSRC-Funkschnittstelle auslesbar sind, wie es beispielsweise bei DSRC-OBUs nach den Standards RFID, CEN-DSRC, UNI-DSRC, ITS-G5 oder WAVE (wireless access in a vehicle environment) der Fall ist. Auch GNSS-OBUs 3, welche zusätzlich eine DSRC-Funkschnittstelle zur Kontrollauslesung ihrer Mautparameter haben, sind geeignet und können in der folgenden Weise kontrolliert werden.

Darüber hinaus sind die hier beschriebenen Kontrollvorrichtungen und -verfahren natürlich auch in der Lage, festzustellen, ob ein mautpflichtiges Fahrzeug 2 überhaupt mit einer OBU 3 ausgestattet ist und - da das Auslesen der Mautparameter eine korrekt funktionierende OBU 3 voraussetzt - dabei auch die Funktionsfähigkeit einer OBU 3 mitzuprüfen.

Schließlich sind die beschriebenen Kontrollvorrichtungen- und Verfahren auch befähigt, allgemeine Verkehrsdelikte der Fahrzeuge 2 zu detektieren und zu ahnden, wie Geschwindigkeitsübertretungen, Übertretungen von (Nacht-)Fahrverboten und sonstige Verkehrsvergehen, soweit sie automatisch mit Hilfe von Messeinrichtungen, Sensoren usw. detektiert werden können.

Zu den genannten Kontrollzwecken wird im Straßenmautsystem 1 eine Kontrollvorrichtung eingesetzt, die sich aus einer ersten Flotte von Aufzeichnungsfahrzeugen 5, einer zweiten Flotte von Kontrollfahrzeugen 6 und einem Deliktserver 7 in der Zentrale 4 zusammensetzt.

Bevorzugt werden wesentlich mehr Kontrollfahrzeuge 6 vorgesehen als Aufzeichnungsfahrzeuge 5. Das Verhältnis der Anzahl von Kontrollfahrzeugen 6 zu Aufzeichnungsfahrzeugen 5 beträgt bevorzugt mindestens 10:1, bevorzugt 100:1, 1000:1 und mehr. Wie nachfolgend erläutert sind Kontrollfahrzeuge 6 einfacher aufgebaut als Aufzeichnungsfahrzeuge 5 und werden mit einem anderen Bewegungsverhalten betrieben, was ein ausgewogenes Abdeckungsverhältnis der Wirkungsbereiche von Aufzeichnungs- und Kontrollfahrzeugen bei minimalen Kosten ergibt: Die Aufzeichnungsfahrzeuge 5 bewegen sich ständig im fließenden Verkehr und ihre Interaktionen mit den zu kontrollierenden Fahrzeugen 2 sind kurz, wogegen die Kontrollfahrzeuge 6 sowohl beweglich als auch stationär eingesetzt werden können und, wenn sie Anhaltekontrollen bzw. Ahndungen von Mautdelikten durchführen, längere Interaktionen mit den kontrollierten Fahrzeugen 2 eingehen.

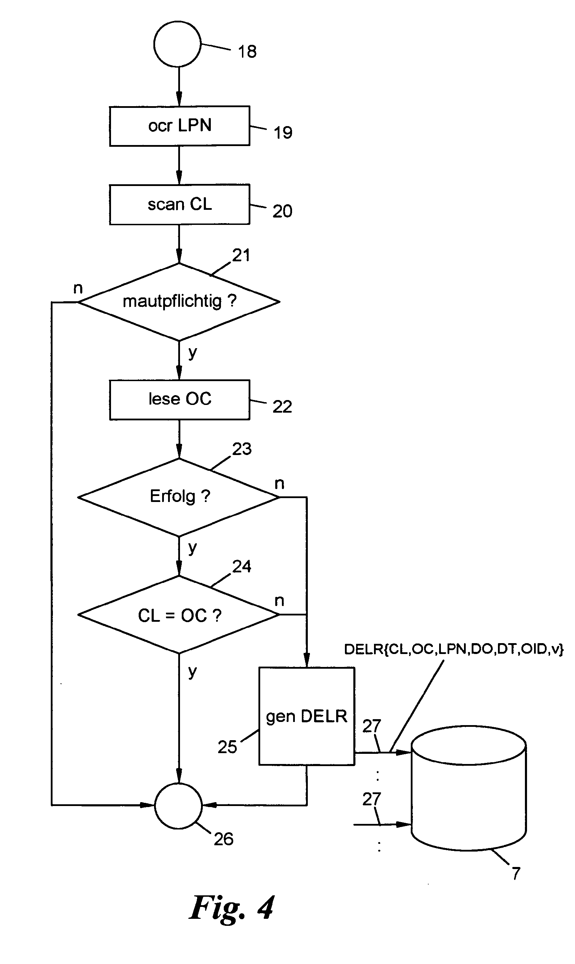

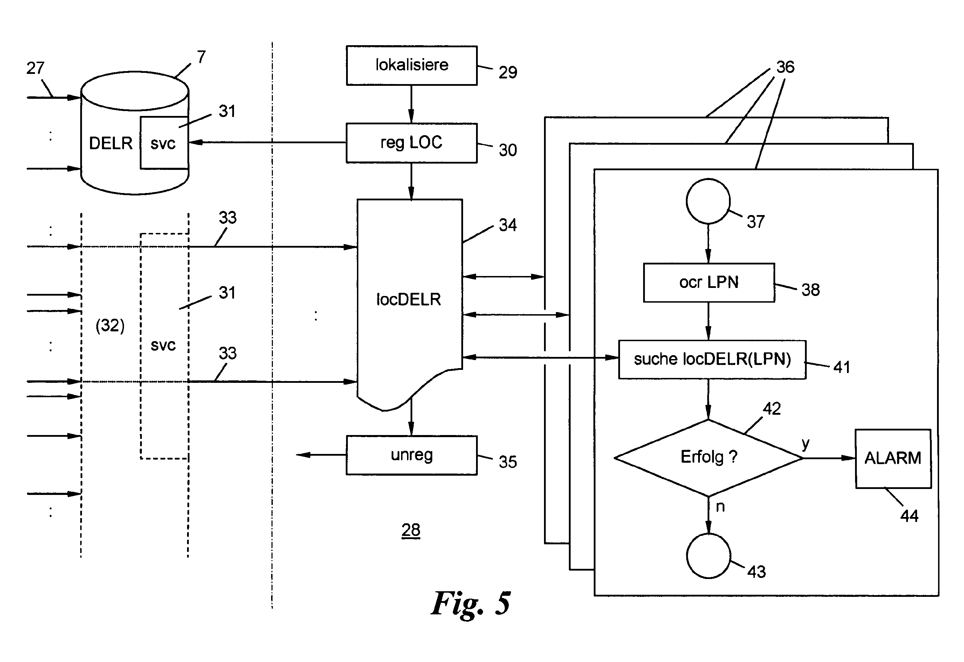

Wie Fig. 1 im Überblick zeigt, dienen die Aufzeichnungsfahrzeuge 5 dazu, in ihren jeweiligen begrenzten Erfassungsbereichen 8 Fahrzeuge 2, die ein Verkehrs- oder Mautdelikt begehen, z.B. eine Geschwindigkeitsübertretung, oder die keine, eine mangelhaft funktionierende oder falsch eingestellte OBU 3 haben, aufzuspüren und dies als Verkehrs- oder Mautdelikt in Form eines Deliktdatensatzes an den Deliktserver 7 zu senden; die dabei zwischen Aufzeichnungsfahrzeug 5 und Fahrzeug 2 ablaufenden Interaktionen werden später anhand der Fig. 2 und 4 noch ausführlicher erläutert. Die Kontrollfahrzeuge 6 dienen dazu, in ihrer jeweiligen Umgebung 9 befindliche Fahrzeuge 2 in Bezug auf für diese am Deliktserver 7 bereitgestellte Deliktdatensätze zu überprüfen und, wenn ein Deliktdatensatz für ein Fahrzeug 2 vorliegt, eine Alarmmeldung abzugeben. Die Besatzung des Kontrollfahrzeuges 6 kann dann die entsprechenden weiteren Überprüfungs- und Ahnungsmaßnahmen treffen, z.B. das Fahrzeug 2 anhalten, eine Verkehrskontrolle durchführen, eine Maut nachverrechnen, eine Geldstrafe verhängen usw. Die dabei zwischen Kontrollfahrzeug 6, Deliktserver 7 und Fahrzeug 2 ablaufenden Interaktionen werden später anhand der Fig. 3 und 5 näher erläutert.

Die Aufzeichnungsfahrzeuge 5, die Kontrollfahrzeuge 6 und der Deliktserver 7 stehen dazu über ein Drahtlosnetzwerk miteinander in Verbindung, z.B. ein Mobilfunknetz, insbesondere ein GSM-, UMTS- oder LTE-Netz, aber auch satellitenbasierte Mobilfunknetze (z.B. Iridium), bevorzugt über paketvermittelte Verbindungen. Alternativ wäre es auch denkbar, ein Netz geographisch verteilter Funkbaken im Straßenmautsystem 1 zu verwenden, beispielsweise DSRC-Funkbake, über welche die Aufzeichnungs- und Kontrollfahrzeuge 5, 6 jeweils bei der Passage einer Bake kommunizieren können.

Die Fig. 2a und 2b zeigen eines der Aufzeichnungsfahrzeuge 5 im Detail zu zwei aufeinanderfolgenden Zeitpunkten bei der Passage eines Fahrzeugs 2 auf einer Fahrbahn 10 im Gegenverkehr. Das Aufzeichnungsfahrzeug 5 verfügt über einen DSRC-Sendeempfänger 11 zur DSRC-Funkkommunikation mit der OBU 3 des Fahrzeugs 2, eine Kennzeichenleseeinrichtung 12 zum automatischen Lesen (optical character recognition, OCR) einer Kennzeichentafel 13 des Fahrzeugs 2, sowie einen Sensor 14, hier einen Laserscanner, zum Erfassen eines Parameters der Außenform des Fahrzeugs 2, im weiteren Formparameter CL genannt.

Der Formparameter CL ist in dem vorliegenden Beispiel eine Fahrzeugklasse ("PKW", "LKW mit zwei Achsen", "LKW mit drei Achsen", "LKW mit vier Achsen", "LKW mit Anhänger" usw); es versteht sich jedoch, dass auch jede andere Eigenschaft der Außenform des Fahrzeugs 2, die mit dem Sensor 14 ermittelt werden kann, als Formparameter CL dienen kann, analog dem erörterten fahrzeugformspezifischen Mautparameter OC.

Der Sensor 14 zur Erfassung des Formparameters CL kann auf jede in der Technik bekannte Art aufgebaut werden, beispielsweise in Form einer elektronischen Kamera, die eines oder mehrere Bilder des passierenden Fahrzeugs 2, auch unter unterschiedlichen Blickwinkeln, aufnehmen kann, aus welchen Bildern dann durch Bilderkennungssoftware entsprechende Eigenschaften und Formparameter des Fahrzeugs 2 extrahiert werden können. Alternativ kann der Sensor 14 ein Radar- oder Laserentfernungsmesser oder -scanner sein, welcher das Fahrzeug 2 bei der Passage mit einem Radar- oder Laserstrahl oder -fächer 15 abtastet, um eine oder mehrere Abmessungen oder Konturen des passierenden Fahrzeugs 2 in Form eines Abtastprofils einer Abtastpunktewolke zu erfassen.

Die Kennzeichenleseeinrichtung 12 des Aufzeichnungsfahrzeugs 5 führt ein in der Technik bekanntes OCR-Lesen eines behördlichen Kennzeichens LPN auf der Kennzeichentafel 13 des Fahrzeugs 2 durch ("automatic license plate number recognition", ALNR); ihr Abbildungspfad bzw. Informationsfluss ist schematisch mit dem Pfeil 16 dargestellt.

Der DSRC-Sendeempfänger 11 des Aufzeichnungsfahrzeugs 5 baut eine DSRC-Funkkommunikation 17 mit der OBU 3 auf, um a) damit festzustellen, ob überhaupt eine OBU 3 auf dem Fahrzeug 2 vorhanden ist, b) damit (implizit) zu überprüfen, ob die OBU 3 antwortet, d.h. korrekt funktioniert, und c) den in der OBU 3 eingestellten oder gespeicherten Mautparameter OC für die weitere Überprüfung auszulesen. Bei dieser Überprüfung soll der ausgelesene Mautparameter OC der OBU 3 mit dem vom Sensor 14 erfassten Formparameter CL des Fahrzeugs 2 konsistent sein: Wenn der Mautparameter OC beispielsweise "dreiachsiger LKW" angibt, sollte der Sensor 14 auch einen damit konsistenten Formparameter CL detektieren, wenn nicht, liegt ein Mautdelikt vor und das Fahrzeug 2 ist ein "Deliktfahrzeug".

Es versteht sich, dass ein aus der OBU 3 ausgelesener Mautparameter OC zusätzlich auch noch von anderen Komponenten abhängen kann als der Fahrzeugform, z.B. dem Status oder Einsatzzweck des Fahrzeugs 2, der Uhrzeit, zeitlichen Rahmenbedingungen (z.B. Nachtfahrverbot), Fahrzeug-Emissionsklassen-Beschränkungen, Geschwindigkeiten usw., was bei der Deliktprüfung ebenfalls berücksichtigt werden kann.

Alle Komponenten DSRC-Sendeempfänger 11, Kennzeichenleseeinrichtung 12 und Sensor 14 des Aufzeichnungsfahrzeugs 5 stehen untereinander - gegebenenfalls über eine (nicht dargestellte) Steuereinrichtung - in Verbindung, und das Aufzeichnungsfahrzeug 2 kann wie geschildert mit dem zentralen Deliktserver 7 über eine (nicht dargestellte) Kommunikationseinrichtung drahtlos kommunizieren.

Unter Bezugnahme auf die Fig. 2 und 4 werden nun die Funktionsweise des Aufzeichnungsfahrzeugs 5 und das bei der Passage eines Fahrzeugs 2 ablaufende Aufzeichnungsverfahren näher erläutert. Bei Annäherung des Fahrzeugs 2 an das Aufzeichnungsfahrzeug 5 (Schritt 18) wird in einem ersten Schritt 19 das Kennzeichen LPN des Fahrzeugs 2 mit Hilfe der Kennzeichenleseeinrichtung 12 von der Kennzeichentafel 13 gelesen (Pfeil 16). Der Schritt 19 kann auch zu jedem späteren Zeitpunkt des Verfahrens von Fig. 4 ausgeführt werden, solange das Kennzeichenleseergebnis LPN noch nicht benötigt wird, so beispielsweise auch später durch Lesen der rückwärtigen Kennzeichentafel 13 des Fahrzeugs 2.

Anschließend wird in einem Schritt 20 mit Hilfe des Sensors 14 der Formparameter CL des Fahrzeugs 2 erfasst, im gezeigten Beispiel durch Laserscannen und Detektieren der Achsanzahl des Fahrzeugs 2, woraus eine achsbezogene Fahrzeugklasse ("class") als Formparameter CL ermittelt wird.

In einem anschließenden Entscheidungsschritt 21 wird aufgrund des Formparameters CL überprüft, ob das Fahrzeug 2 überhaupt mautpflichtig ist oder nicht. Beispielsweise könnten zweiachsige Fahrzeuge 2 als nicht-mautpflichtig und Fahrzeuge 2 mit mehr als zwei Achsen als mautpflichtig definiert sein. Wenn der Formparameter CL Mautpflicht anzeigt (Zweig "y"), wird im anschließenden Schritt 22 die OBU 3 mit Hilfe des DSRC-Sendeempfängers 11 kontaktiert (Pfeil 17). Dabei wird der Mautparameter OC aus der OBU 3 ausgelesen und eine erfolgreiche Auslesung zeigt gleichzeitig an, dass die OBU 3 vorhanden ist und funktioniert. Im darauffolgenden Entscheidungsschritt 23 wird bei einem Fehlschlagen des Auslesens (Zweig "n") direkt zum Schritt 25 der Erzeugung eines Deliktdatensatzes DELR übergegangen.

Andernfalls (Zweig "y" von Schritt 23) wird in der weiteren Entscheidung 24 überprüft, ob der erfasste Formparameter CL und der ausgelesene Mautparameter OC zueinander passen bzw. konsistent sind, d.h. der Mautparameter OC der OBU 3 so eingestellt ist, dass er dem aufgrund der Außenform des Fahrzeugs 2 erfassten Formparameter CL entspricht. Wenn ja (Zweig "y"), ist alles in Ordnung und das Verfahren endet bei 26. Wenn nein (Zweig "n"), liegt eine Inkonsistenz vor, welche ein mögliches Mautdelikt darstellt, und es wird zu Schritt 25 des Erzeugens des Deliktdatensatzes DELR übergegangen.

Im Schritt 25 wird der Deliktdatensatz DELR erzeugt, welcher den erfassten Formparameter CL, den ausgelesenen Mautparameter OC und das Kennzeichenleseergebnis LPN enthält, sowie optional weitere Daten wie den aktuellen Ort ("Deliktort") DO und die aktuelle Zeit ("Deliktzeit") DT des Aufzeichnungsvorgangs, aus der OBU 3 ausgelesene weitere Stammdaten wie OBU-Kennung OID, Benutzer-Stammdaten, Fahrzeug-Stammdaten usw.

Der Deliktort DO kann dabei auch verschiedenste Arten ermittelt werden: Das Aufzeichnungsfahrzeug 5 kann über eine eigene Positionsbestimmungseinrichtung verfügen, z.B. einen Satellitennavigationsempfänger, und den aktuellen Ort der Passage als Deliktort DO aufzeichnen. Alternativ kann die OBU 3, insbesondere wenn sie von selbst-verortendem Typ ist, ihre aktuelle Position als Deliktort DO dem Aufzeichnungsfahrzeug 5 zur Verfügung stellen. Auch die bekannten Orte benachbarter Funkbaken eines bakenbasierten Straßenmautsystems 1 können näherungsweise herangezogen werden.

Der Deliktdatensatz DELR wird anschließend im Schritt 27 an den Deliktserver 7 zur weiteren Verwendung durch die Kontrollfahrzeuge 6 gesandt.

Es versteht sich, dass die Schritte 19 bis 24 - soweit sie nicht einander voraussetzen - auch in anderer Reihenfolge vorgenommen werden können.

Die im Deliktserver 7 und einem beispielhaften Kontrollfahrzeug 6 ablaufenden Schritte werden anhand der Fig. 3 und 5 erläutert. Die Fig. 3a und 3b zeigen die Situation bei der Passage eines Kontrollfahrzeugs 6 an einem zu kontrollierenden Fahrzeug 2 zu zwei aufeinanderfolgenden Zeitpunkten. In Vorbereitung (oder während) einer solchen Kontrolle werden den Kontrollfahrzeugen 6 vom Deliktserver 7 selektiv jene Deliktdatensätze DELR zur Verfügung gestellt, welche von Delikten aus ihrer jeweiligen Umgebung 9 stammen.

Zu diesem Zweck registriert sich in einer Registrierungsphase 28 jedes Kontrollfahrzeug 6 mit seiner eigenen Position LOC (oder gleich mit seiner Umgebung 9) im Deliktserver 7. Die aktuelle Position LOC (oder Umgebung 9) des Kontrollfahrzeugs 6 kann von diesem beispielsweise in einem Positionsermittlungsschritt 29 autark selbst ermittelt werden, z.B. mit Hilfe eines Satellitennavigationsempfängers, durch Informationen benachbarter Funkbaken od.dgl. Alternativ kann die Position LOC oder Umgebung 9 auch vom Benutzer manuell im Schritt 29 in eine Eingabeeinheit des Kontrollfahrzeugs 6 eingegeben werden.

Im anschließenden Registrierungsschritt 30 registriert sich das Kontrollfahrzeug 6 mit seiner Position LOC (oder Umgebung 9) im Deliktserver 7, welcher für jedes registrierte Kontrollfahrzeug 6 einen eigenen Task 31 eröffnet.

Mit Hilfe des Tasks 31 kann der Deliktserver 7 alle in den Schritten 27 eingelangten und weiter einlangenden Deliktdatensätze DELR ortsspezifisch "filtern" (Phase 32): Der Deliktserver überprüft dabei, ob der Deliktort DO eines Deliktdatensatzes DELR in die Umgebung 9 um die Position LOC eines Kontrollfahrzeugs 6 fällt und, wenn ja, stellt er diesen Deliktdatensatz DELR diesem Kontrollfahrzeug 6 zur Verfügung (Schritt 33). Das Kontrollfahrzeug 6 nimmt die ihm auf diese Weise bereitgestellten Deliktdatensätze DELR in eine lokale Deliktdatensatzliste locDELR 34 auf.

Das Bereitstellen der ortsspezifisch gefilterten Deliktdatensätze DELR im Schritt 33 kann sowohl fortlaufend, z.B. periodisch oder im Anlassfall, erfolgen, beispielsweise indem jeder einzelne Deliktdatensatz DELR vom Deliktserver 7 an das Kontrollfahrzeug 6 gesandt wird, oder stapelweise (in Batch-Verarbeitung), indem sich das Kontrollfahrzeug 6 jeweils die zu einem bestimmten Zeitpunkt bereitgestellten Deliktdatensätze DELR vom Deliktserver 7 abholt oder von diesem geschickt bekommt.

Die Deliktdatensätze DELR tragen mit ihrer optionalen Deliktzeit DT auch jeweils einen "Zeitstempel", der ihre zeitliche Gültigkeit begrenzen kann: So können "zu alte" Deliktdatensätze DELR, d.h. solche, deren Zeitstempel DT außerhalb eines vorgegebenen Zeitraums liegt, automatisch verworfen werden, sowohl im Deliktserver 7 als auch im Kontrollfahrzeug 6, und/oder der Deliktserver 7 kann einem Kontrollfahrzeug 6 auch nur "aktuelle" Deliktdatensätze DELR zur Verfügung stellen, d.h. solche, deren Zeitstempel DT innerhalb eines vorgegebenen Zeitraums liegt.

In der Registrierungsphase 28 "abonnieren" die Kontrollfahrzeuge 6 somit gleichsam Deliktdatensätze DELR aus ihrer Umgebung 9, und dies z.B. solange, bis sie in einem Schritt 35 eine Deregistrierungsanforderung an den Deliktserver 7 senden, woraufhin dieser den Task 31 löscht.

Die Kontrollfahrzeuge 6 sind auf dieser Weise jeweils mit aktuellen und ortsspezifischen Deliktdatensätzen DELR aus ihrer Umgebung 9 bestückt und können bei der Passage bzw. Kontrolle eines Fahrzeugs 2 Kontrolltasks 36 ausführen, welche jeweils auf die lokale Deliktdatensatzliste 34 zugreifen.

In jedem Kontrolltask 36 wird gemäß den Fig. 3 und 5 bei Annäherung eines Fahrzeugs 2 (Schritt 37) in einem ersten Schritt 38 das Kennzeichen LPN von der Kennzeichentafel 13 mit Hilfe einer Kennzeichenleseeinrichtung 39 des Kontrollfahrzeugs 6 automatisch gelesen (Pfeil 40). Anschließend sucht das Kontrollfahrzeug 6 im Schritt 41 einen dazu passenden Deliktdatensatz DELR aus seiner lokalen Deliktdatensatzliste 34 heraus, soferne ein solcher vorhanden. Wenn zu dem Kennzeichenleseergebnis LPN kein Deliktdatensatz DELR vorhanden ist (Zweig "n" im Überprüfungsschritt 42), endet der Task 36 bei 43 und das Kennzeichenleseergebnis LPN kann z.B. zwecks Vertraulichkeit wieder gelöscht werden. Existiert jedoch ein Deliktdatensatz DELR zum Kennzeichenleseergebnis LPN (Zweig "y"), wird zum A-larmschritt 44 verzweigt, in welchem das Kontrollfahrzeug 6 eine Alarmmeldung an seine Besatzung ausgibt.

Die Alarmmeldung kann beispielsweise ein optischer oder akustischer Alarm sein oder eine Anzeige auf einem Bildschirm, welche gleichzeitig das gelesene Kennzeichen LPN und den Deliktdatensatz DELR anzeigt. Die Besatzung kann dann entsprechende Ahndungsmaßnahmen ergreifen, z.B. das Fahrzeug 2 anhalten, die OBU 3 weiter überprüfen und gegebenenfalls eine entsprechende Nachmaut verrechnen oder Strafe verhängen. Die Alarmmeldung kann zusätzlich automatisch auf einer nach außen sichtbaren Signaleinrichtung 47 des Kontrollfahrzeugs 6 für das kontrollierte Fahrzeug 2 angezeigt werden (Pfeil 48), um dieses z.B. zum Anhalten aufzufordern, beispielsweise mit einer Leuchtschrift "STOP".

Optional kann der Task 36 zusätzlich auch nochmals die OBU 3 mit Hilfe eines DSRC-Sendeempfängers 45 des Kontrollfahrzeugs 6 ausgelesen werden (Pfeil 46), z.B. für weitere Konsistenzprüfungen oder Identifikationen.

Der Deliktserver 7 kann optional mit Schätzungsalgorithmen ausgestattet werden, welche eine Schätzung der zeitlichen Veränderungen der Deliktorte DO (als "letzte Aufenthaltsorte" der Deliktfahrzeuge 2) aufgrund von bei der Deliktaufzeichnung gemessenen Geschwindigkeiten und Fahrtrichtungen der Fahrzeuge 2 durchführen. Dazu kann das Aufzeichnungsfahrzeug 5 mit einer Einrichtung 49 zur Messung von Geschwindigkeit und Fahrtrichtung, d.h. des Bewegungsvektors v, eines Fahrzeugs 2 ausgestattet werden. Die Einrichtung 49 kann auch durch eine als Videokamera ausgebildete Kennzeichenleseeinrichtung 12, in deren Bildern Bewegungen detektiert werden können, oder einen als Doppler-Radar ausgeführten DSRC-Sendeempfänger 11 oder durch entsprechende Messungen mit Hilfe des Sensors 14, z.B. Laser- oder Lidar-Messungen am Abtaststrahl bzw. -fächer 15, realisiert werden.

Die Geschwindigkeitsmesseinrichtungen 11, 12, 14, 49 des Aufzeichnungsfahrzeugs 5 können überdies zur Detektion allgemeiner Verkehrsdelikte der Fahrzeuge 2 eingesetzt werden, z.B. zur Detektion von Geschwindigkeitsübertretungsdelikten.

Der Bewegungsvektor v des Fahrzeugs 2 zum Deliktzeitpunkt DT kann in den Deliktdatensatz DELR integriert und dem Deliktserver 7 übermittelt werden. Der Deliktserver 7 kann daraufhin für spätere Zeitpunkte mögliche neue Aufenthaltsorte DO des Fahrzeugs 2 extrapolieren bzw. schätzen, auch unterstützt durch Straßennetzpläne des Straßennetzes, und in der Phase 32 für jene Zeitpunkte berücksichtigen, zu denen die Auswahl der für eine Umgebung 9 eines Kontrollfahrzeugs 6 relevanten Deliktdatensätze DELR vorgenommen wird. Dadurch können Deliktdatensätze DELR von Fahrzeugen 2, deren Deliktorte DO früher außerhalb einer Umgebung 9 um die Position LOC eines Kontrollfahrzeugs 6 lagen, zu einem späteren Zeitpunkt - extrapoliert - in die Umgebung 9 fallen und damit diesem Kontrollfahrzeug 6 bzw. dessen lokaler Deliktdatensatzliste 34 zur Verfügung gestellt werden.

Die Umgebungen 9 der Kontrollfahrzeuge 6 werden auf diese Weise zeitdynamisch angepasst. Überdies können die Umgebungen 9 speziell an die Gegebenheiten des Straßennetzes angepasst werden, auf dem sich das Kontrollfahrzeug 6 bewegt, um auch dessen eigene Bewegung zu berücksichtigen: Die Umgebungen 9 sind dann nicht mehr (wie in Fig. 1 schematisch dargestellt) Kreise, sondern werden entsprechend den Eigenbewegungen eines Kontrollfahrzeugs 6 und seiner Möglichkeiten zu Abzweigungen im Straßennetz dynamisch angepasst, z.B. elliptisch oder baumförmig, um stets jene Auswahl von Deliktdatensätzen DELR vom Deliktserver 7 zu erhalten und in die lokale Deliktdatensatzliste locDELR 34 aufnehmen zu können, für die es am wahrscheinlichsten ist, dass das Kontrollfahrzeug 6 bei seiner weiteren Bewegung auf diese Deliktfahrzeuge 2 trifft. Alternativ können auch beliebige Formen von Umgebungen 9 vorgegeben werden.

Die Erfindung ist demgemäß nicht auf die dargestellten Ausführungsformen beschränkt, sondern umfasst alle Varianten und Modifikationen, die in den Rahmen der angeschlossenen Ansprüche fallen.

## Patentansprüche

1. Vorrichtung zur Kontrolle in einem Straßenmautsystem (1), das auf von Fahrzeugen (2) mitgeführten Onboard-Units (3) basiert, umfassend:
zumindest ein Aufzeichnungsfahrzeug (5) und zumindest ein Kontrollfahrzeug (6), die jeweils eine Leseeinrichtung (12, 39) zum Kennzeichenlesen einer Kennzeichentafel (13) des Fahrzeugs (2) aufweisen und drahtlos mit einem zentralen Deliktserver (7) in Verbindung stehen,
wobei das Aufzeichnungsfahrzeug (5) dafür ausgebildet ist, ein Verkehrs- oder Mautdelikt einer Onboard-Unit (3) oder eines diese mitführenden Fahrzeugs (2) zu detektieren und, im Deliktfall, einen Deliktdatensatz (DELR) mit Deliktort (DO) und Kennzeichenleseergebnis (LPN) des Fahrzeugs (2) an den Deliktserver (7) zu senden,
wobei der Deliktserver (7) dafür ausgebildet ist, Kontrollfahrzeuge (6) mit Positionen (LOC) oder deren Umgebungen (9) zu registrieren und Deliktdatensätze (DELR), deren Deliktorte (DO) in die Umgebung (9) um eine Position (LOC) fallen, einem mit dieser Position (LOC) bzw. Umgebung (9) registrierten Kontrollfahrzeug (6) bereitzustellen, und
wobei das Kontrollfahrzeug (6) dafür ausgebildet ist, seine Position (LOC) oder Umgebung (9) im Deliktserver (7) zu registrieren sowie zu einem von seiner Leseeinrichtung (39) gelesenen Kennzeichen (LPN) einen vom Deliktserver (7) bereitgestellten Deliktdatensatz (DELR) zu ermitteln und, wenn ein solcher vorhanden, eine Alarmmeldung auszugeben.

2. Vorrichtung nach Anspruch 1 zur Kontrolle eines Straßenmautsystems mit Onboard-Units (3), aus welchen zumindest ein fahrzeugformspezifischer Mautparameter (CL) über eine DSRC-Funkschnittstelle (17, 46) auslesbar ist, **dadurch gekennzeichnet,**
**dass** das Aufzeichnungsfahrzeug (5) einen DSRC-Sendeempfänger (11) zum Auslesen des Mautparameters (OC) eines passierenden Fahrzeugs (2) und einen Sensor (14) zum Erfassen eines Formparameters (CL) des Fahrzeugs (2) aufweist,
wobei das Aufzeichnungsfahrzeug (5) dafür ausgebildet ist, den Mautparameter (OC) auf Konsistenz mit dem Formparameter (CL) zu prüfen und bei Inkonsistenz den Deliktdatensatz (DELR) mit Deliktort (DO) und Kennzeichenleseergebnis (LPN) des Fahrzeugs (2) an den Deliktserver (7) zu senden.

3. Vorrichtung nach Anspruch 1 oder 2, **dadurch gekennzeichnet, dass** das Aufzeichnungsfahrzeug (5) mit einer Einrichtung (11, 12, 14, 49) zur Messung von Geschwindigkeit und bevorzugt Fahrtrichtung eines passierenden Fahrzeugs (2) ausgestattet ist, um das Verkehrs- oder Mautdelikt auch auf Grundlage dieser Messwerte (v) zu bestimmen.

4. Vorrichtung nach einem der Ansprüche 1 bis 3, **gekennzeichnet durch** eine erste Vielzahl von Aufzeichnungsfahrzeugen (5) und eine zweite Vielzahl von Kontrollfahrzeugen (6), wobei die zweite Vielzahl wesentlich größer ist als die erste, bevorzugt um mindestens eine Zehnerpotenz.

5. Vorrichtung nach einem der Ansprüche 1 bis 4, **dadurch gekennzeichnet, dass** der Formparameter (CL) und der Mautparameter (OC) jeweils eine Fahrzeuglänge oder -achsanzahl ist.

6. Vorrichtung nach einem der Ansprüche 1 bis 5, **dadurch gekennzeichnet, dass** der Sensor (14) ein Laserentfernungsmesser oder Laserscanner ist, welcher zumindest einen Teil der Form des Fahrzeuges (2) durch Abtasten (15) während der Passage erfaßt und daraus zumindest einen Formparameter (CL) erzeugt.

7. Vorrichtung nach einem der Ansprüche 1 bis 6, **dadurch gekennzeichnet, dass** der Deliktdatensatz (DELR) auch einen Zeitstempel (DT) enthält und der Deliktserver (7) dafür ausgebildet ist, nur Deliktdatensätze (DELR) innerhalb eines vorgegebenen Zeitraums zu berücksichtigen.

8. Vorrichtung nach einem der Ansprüche 1 bis 7, **dadurch gekennzeichnet, dass** das Aufzeichnungsfahrzeug (5) mit einer Einrichtung (11, 12, 14, 49) zur Messung von Geschwindigkeit und Fahrtrichtung eines passierenden Fahrzeugs (2) ausgestattet ist und diese Messwerte (v) in den Deliktdatensatz (DELR) aufnimmt, und dass der Deliktserver (7) dafür ausgebildet ist, aus den genannten Messwerten (v) eine zeitliche Veränderung des Deliktorts (DO) zu extrapolieren, um diese bei der Überprüfung, ob ein Deliktort (DO) in die Umgebung (9) einer Position (LOC) zu einem Zeitpunkt fällt, zu berücksichtigen.

9. Aufzeichnungsfahrzeug (5) für eine Kontrollvorrichtung nach einem der Ansprüche 1 bis 8, **gekennzeichnet durch**
eine Kommunikationseinrichtung zur Drahtloskommunikation mit einem zentralen Deliktserver (7),
einen DSRC-Sendeempfänger (11) zum Auslesen eines fahrzeugformspezifischen Mautparameters (OC) eines passierenden Fahrzeugs (2),
einen Sensor (14) zum Erfassen eines Formparameters (CL) des Fahrzeugs (2) sowie
eine Leseeinrichtung (12) zum Kennzeichenlesen einer Kennzeichentafel (13) des Fahrzeugs (2),
wobei das Aufzeichnungsfahrzeug (5) dafür ausgebildet ist, den Mautparameter (OC) auf Konsistenz mit dem Formparameter (CL) zu prüfen und bei Inkonsistenz einen Deliktdatensatz (DELR) mit Deliktort (DO) und Kennzeichenleseergebnis (LPN) des Fahrzeugs (2) an den Deliktserver (7) zu senden.

10. Aufzeichnungsfahrzeug nach Anspruch 9, **dadurch gekennzeichnet, dass** der Sensor (14) ein Laserscanner ist, welcher zumindest einen Teil der Form des Fahrzeuges (2) durch Abtasten während der Passage erfaßt und daraus zumindest einen Formparameter (CL) erzeugt.

11. Aufzeichnungsfahrzeug nach Anspruch 9 oder 10, **dadurch gekennzeichnet, dass** es mit einer Einrichtung zur Bestimmung des Deliktorts (DO), bevorzugt einem Satellitennavigationsempfänger, ausgestattet ist.

12. Aufzeichnungsfahrzeug nach einem der Ansprüche 9 bis 11, **dadurch gekennzeichnet, dass** es mit einer Einrichtung (11, 12, 14, 49) zur Messung von Geschwindigkeit und bevorzugt Fahrtrichtung eines passierenden Fahrzeugs (2) ausgestattet ist und diese Messwerte (v) in den Deliktdatensatz (DELR) aufnimmt.

13. Deliktserver für eine Kontrollvorrichtung nach einem der Ansprüche 1 bis 8, **gekennzeichnet durch**
eine Kommunikationseinrichtung zur Drahtloskommunikation mit Aufzeichnungsfahrzeugen (5) und Kontrollfahrzeugen (6),
wobei der Deliktserver (7) dafür ausgebildet ist,
- von Aufzeichnungsfahrzeugen (5) Deliktdatensätze (DELR) zu empfangen und zu speichern,
- Kontrollfahrzeuge (6) mit Positionen (LOC) oder deren Umgebungen (9) zu registrieren und
- Deliktdatensätze (DELR), deren Deliktorte (DO) in die Umgebung (9) um eine Position (LOC) fallen, einem mit dieser Position (LOC) bzw. Umgebung (9) registrierten Kontrollfahrzeug (6) bereitzustellen.

14. Deliktserver nach Anspruch 13, **dadurch gekennzeichnet, dass** der Deliktdatensatz (DELR) auch einen Zeitstempel (DT) enthält und der Deliktserver (7) dafür ausgebildet ist, nur Deliktdatensätze (DELR) innerhalb eines vorgegebenen Zeitraums zu berücksichtigen.

15. Deliktserver nach Anspruch 13 oder 14, **dadurch gekennzeichnet, dass** der Deliktdatensatz (DELR) auch Meßwerte (v) über Geschwindigkeit und Fahrtrichtung enthält und der Deliktserver (7) dafür ausgebildet ist, aus den genannten Messwerten (v) eine zeitliche Veränderung des Deliktorts (DO) zu extrapolieren, um diese bei der Überprüfung, ob ein Deliktort (DO) in die Umgebung (9) einer Position (LOC) zu einem Zeitpunkt fällt, zu berücksichtigen.

16. Kontrollfahrzeug (6) für eine Kontrollvorrichtung nach einem der Ansprüche 1 bis 8, **gekennzeichnet durch**
eine Kommunikationseinrichtung zur Drahtloskommunikation mit einem zentralen Deliktserver (7),
eine Einrichtung zur Registrierung seiner Position (LOC)oder Umgebung (9) im Deliktserver (7) sowie
eine Leseeinrichtung (39) zum Kennzeichenlesen einer Kennzeichentafel (13) eines passierenden Fahrzeugs (2),
wobei das Kontrollfahrzeug (6) dafür ausgebildet ist, zu einem gelesenen Kennzeichen (LPN) einen vom Deliktserver (7) bereitgestellten Deliktdatensatz (DELR) zu ermitteln und, wenn ein solcher vorhanden, eine Alarmmeldung auszugeben.

17. Kontrollfahrzeug nach Anspruch 16, **dadurch gekennzeichnet, dass** der Deliktdatensatz (DELR) auch einen Zeitstempel (DT) enthält und das Kontrollfahrzeug (6) dafür ausgebildet ist, Deliktdatensätze (DELR) außerhalb eines vorgegebenen Zeitraums zu verwerfen.

18. Kontrollfahrzeug nach Anspruch 16 oder 17, **dadurch gekennzeichnet, dass** es mit einer Einrichtung zur Bestimmung seiner Position (LOC), bevorzugt einem Satellitennavigationsempfänger, ausgestattet ist, um diese im Deliktserver (7) zu registrieren.

19. Verfahren zur Kontrolle in einem Straßenmautsystem (1), das auf von Fahrzeugen (2) mitgeführten Onboard-Units (3) basiert, unter Verwendung zumindest eines Aufzeichnungsfahrzeugs (5) und zumindest eines Kontrollfahrzeug (6), die drahtlos mit einem zentralen Deliktserver (7) kommunizieren können, umfassend:
im Aufzeichnungsfahrzeug (5):
- Detektieren (20, 22) eines Verkehrs- oder Mautdelikts einer Onboard-Unit (3) oder eines diese mitführenden Fahrzeugs (2) und, im Deliktfall,
- Senden (27) eines Deliktdatensatzes (DELR) mit einem ermittelten Deliktort (DO) und einem gelesenen Kennzeichen (LPN) des Fahrzeugs (2) an den Deliktserver (7);
im Deliktserver (7):
- Registrieren (30) von Kontrollfahrzeugen (6) mit Positionen (LOC) oder deren Umgebungen (9),
- Empfangen (27) von Deliktdatensätzen (DELR) von Aufzeichnungsfahrzeugen (5) und, wenn deren Deliktorte (DO) in die Umgebung (9) um eine Position (LOC) fallen,
- Bereitstellen (31-33) dieser Deliktdatensätze (DELR) einem mit dieser Position (LOC) bzw. Umgebung (9) registrierten Kontrollfahrzeug (6);
im Kontrollfahrzeug (6):
- Registrieren (29, 30) seiner Position (LOC) oder Umgebung (9) im Deliktserver (7),
- Kennzeichenlesen (38) einer Kennzeichentafel (13) eines passierenden Fahrzeugs (2),
- Ermitteln (41), zu einem gelesenen Kennzeichen (LPN), eines vom Deliktserver (7) bereitgestellten Deliktdatensatzes (DELR) und, wenn ein solcher vorhanden,
- Ausgeben (44) einer Alarmmeldung.

20. Verfahren nach Anspruch 19 zur Kontrolle eines Straßenmautsystems mit Onboard-Units (3), aus welchen zumindest ein fahrzeugformspezifischer Mautparameter (OC) über eine DSRC-Funkschnittstelle (17, 46) auslesbar ist, **gekennzeichnet durch**:
im Aufzeichnungsfahrzeug (5):
- Auslesen (22) des Mautparameters (OC) eines passierenden Fahrzeugs (2) mittels eines DSRC-Sendeempfängers (11),
- Erfassen (20) eines Formparameters (CL) des Fahrzeugs (2) mittels eines Sensors (14),
- Prüfen (24) des Mautparameters (OC) auf Konsistenz mit dem Formparameter (CL) und, bei Inkonsistenz,
- Senden (27) eines Deliktdatensatzes (DELR) mit Deliktort (DO) und Kennzeichenleseergebnis (LPN) des Fahrzeugs (2) an den Deliktserver (7).

21. Verfahren nach Anspruch 19 oder 20, **dadurch gekennzeichnet, dass** im Aufzeichnungsfahrzeug (5) Geschwindigkeit und bevorzugt Fahrtrichtung eines passierenden Fahrzeugs (2) gemessen werden und das Verkehrs- oder Mautdelikt auch auf Grundlage dieser Messwerte (v) bestimmt wird.

22. Verfahren nach einem der Ansprüche 19 bis 21, **dadurch gekennzeichnet, dass** der Formparameter (CL) und der Mautparameter (OC) jeweils eine Fahrzeuglänge oder -achsanzahl ist.

23. Verfahren nach einem der Ansprüche 19 bis 22, **dadurch gekennzeichnet, dass** der Deliktdatensatz (DELR) auch einen Zeitstempel (DT) enthält und im Deliktserver (7) nur Deliktdatensätze (DELR) mit einem Zeitstempel (DT) innerhalb eines vorgegebenen Zeitraums berücksichtigt und/oder im Kontrollfahrzeug (6) Deliktdatensätze (DELR) mit einem außerhalb eines vorgegebenen Zeitraums liegenden Zeitstempel (DT) verworfen werden.

24. Verfahren nach einem der Ansprüche 19 bis 23, **dadurch gekennzeichnet, dass** im Aufzeichnungsfahrzeug (5) Geschwindigkeit und bevorzugt Fahrtrichtung eines passierenden Fahrzeugs (2) gemessen und in den Deliktdatensatz (DELR) aufgenommen werden und daraus im Deliktserver (7) eine zeitliche Veränderung des Deliktorts (DO) extrapoliert wird, um diese bei der Überprüfung, ob ein Deliktort (DO) in die Umgebung (9) einer Position (LOC) zu einem Zeitpunkt fällt, zu berücksichtigen.

## Claims

1. A control device for a road toll system (1) which is based on on-board units (3) carried by vehicles (2), comprising:
at least one recording vehicle (5) and at least one control vehicle (6), which each comprise a read unit (12, 39) for reading the license plate number of a license plate (13) of the vehicle (2) and are wirelessly connected to a central violation server (7),
wherein the recording vehicle (5) is configured to detect a traffic or toll violation of an on-board unit (3), or of a vehicle (2) carrying the same, and, if a violation exists, to transmit a violation data record (DELR), including the location of the violation (DO) and the license plate number read result (LPN) of the vehicle (2), to the violation server (7),
wherein the violation server (7) is configured to register control vehicles (6), including the positions (LOC) or the surroundings (9) thereof, and to provide violation data records (DELR), the locations of the violations (DO) of which are in the surroundings (9) of a position (LOC), to a control vehicle (6) that is registered with this position (LOC) or these surroundings (9), and
wherein the control vehicle (6) is configured to register the position (LOC) or surroundings (9) thereof in the violation server (7) and to determine a violation data record (DELR) that has been provided by the violation server (7) for a read license plate number (LPN) and, if such a record exists, to issue an alert message.

2. The control device according to claim 1 for a road toll system comprising on-board units (3), from which at least one vehicle shape-specific toll parameter (CL) can be read out via a DSRC radio interface (17, 46), **characterized in that**
the recording vehicle (5) comprises a DSRC transceiver (11) for reading out the toll parameter (OC) of a passing vehicle (2) and a sensor (14) for detecting a shape parameter (CL) of the vehicle (2),
wherein the recording vehicle (5) is configured to check the toll parameter (OC) for consistency with the shape parameter (CL) and, in case of inconsistency, to transmit the violation data record (DELR), including the location of the violation (DO) and license plate number read result (LPN) of the vehicle (2), to the violation server (7).

3. The device according to claim 1 or 2, **characterized in that** the recording vehicle (5) is equipped with a unit (11, 12, 14, 49) for measuring the speed, and preferably the driving direction, of a passing vehicle (2) so as to determine the traffic or toll violation also based on these measured values (v).

4. The device according to any one of claims 1 to 3, **characterized by** a first plurality of recording vehicles (5) and a second plurality of control vehicles (6), wherein the second plurality is considerably greater than the first, preferably by at least a power of ten.

5. The device according to any one of claims 1 to 4, **characterized in that** the shape parameter (CL) and the toll parameter (OC) are a respective vehicle length or a respective number of vehicle axles.

6. The device according to any one of claims 1 to 5, **characterized in that** the sensor (14) is a laser rangefinder or laser scanner, which detects at least a portion of the shape of the vehicle (2) by scanning (15) as it passes and generates at least one shape parameter (CL) therefrom.

7. The device according to any one of claims 1 to 6, **characterized in that** the violation data record (DELR) also contains a time stamp (DT), and the violation server (7) is configured to take only violation data records (DELR) into consideration that are within a predetermined time period.

8. The device according to any one of claims 1 to 7, **characterized in that** the recording vehicle (5) is equipped with a unit (11, 12, 14, 49) for measuring the speed and driving direction of a passing vehicle (2) and adds these measured values (v) to the violation data record (DELR), and that the violation server (7) is configured to extrapolate a temporal change of the location of the violation (DO) based on the aforementioned measurement values (v) so as to take this into consideration when checking whether a location of a violation (DO) is within the surroundings (9) of a position (LOC) at a particular time.

9. A recording vehicle (5) for a control device according to any one of claims 1 to 8, **characterized by**
a communication unit for wirelessly communicating with a central violation server (7),
a DSRC transceiver (11) for reading out a vehicle shape-specific toll parameter (OC) of a passing vehicle (2),
a sensor (14) for detecting a shape parameter (CL) of the vehicle (2), and
a read unit (12) for reading the license plate number of a license plate (13) of the vehicle (2),
wherein the recording vehicle (5) is configured to check the toll parameter (OC) for consistency with the shape parameter (CL) and, in case of inconsistency, to transmit a violation data record (DELR), including the location of the violation (DO) and license plate number read result (LPN) of the vehicle (2), to the violation server (7).

10. The recording vehicle according to claim 9, **characterized in that** the sensor (14) is a laser scanner, which detects at least a portion of the shape of the vehicle (2) by scanning (15) as it passes and generates at least one shape parameter (CL) therefrom.

11. The recording vehicle according to claim 9 or 10, **characterized in that** it is equipped with a unit for determining the location of the violation (DO), preferably a satellite navigation receiver.

12. The recording vehicle according to any one of claims 9 to 11, **characterized in that** it is equipped with a unit (11, 12, 14, 49) for measuring the speed, and preferably the driving direction, of a passing vehicle (2) and adds these measured values (v) to the violation data record (DELR).

13. A violation server for a control device according to any one of claims 1 to 8, **characterized by**
a communication unit for wirelessly communicating with recording vehicles (5) and control vehicles (6),
wherein the violation server (7) is configured
- to receive violation data records (DELR) from recording vehicles (5) and store these,
- to register control vehicles (6), including the positions (LOC) or the surroundings (9) thereof, and
- to provide violation data records (DELR), the locations of the violations (DO) of which are within the surroundings (9) of a position (LOC), to a control vehicle (6) that is registered with this position (LOC) or these surroundings (9).

14. The violation server according to claim 13, **characterized in that** the violation data record (DELR) also contains a time stamp (DT), and the violation server (7) is configured to take only violation data records (DELR) into consideration that are within a predetermined time period.

15. The violation server according to claim 13 or 14, **characterized in that** the violation data record (DELR) also contains measured values (v) regarding the speed and driving direction, and the violation server (7) is configured to extrapolate a temporal change of the location of the violation (DO) based on the aforementioned measured values (v) so as to take these into consideration when checking whether a location of a violation (DO) is within the surroundings (9) of a position (LOC) at a particular time.

16. A control vehicle (6) for a control device according to any one of claims 1 to 8, **characterized by**
a communication unit for wirelessly communicating with a central violation server (7),
a unit for registering the position (LOC) or surroundings (9) thereof in the violation server (7), and
a read unit (39) for reading the license plate number of a license plate (13) of a passing vehicle (2),
wherein the control vehicle (6) is configured to determine a violation data record (DELR) that has been provided by the violation server (7) for a read license plate number (LPN) and, if such a record exists, to issue an alert message.

17. The control vehicle according to claim 16, **characterized in that** the violation data record (DELR) also contains a time stamp (DT), and the control vehicle (6) is configured to discard violation data records (DELR) that are outside a predetermined time period.

18. The control vehicle according to claim 16 or 17, **characterized in that** it is equipped with a unit for determining the position (LOC) thereof, preferably a satellite navigation receiver, so as to register the position in the violation server (7).

19. A control method for a road toll system (1) which is based on on-board units (3) carried by vehicles (2), using at least one recording vehicle (5) and at least one control vehicle (6), which can wirelessly communicate with a central violation server (7), comprising the following steps:
in the recording vehicle (5):
- detecting (20, 22) a traffic or toll violation of an on-board unit (3) or of a vehicle carrying the same and, if a violation exists,
- transmitting a violation data record (DELR), containing a determined location of the violation (DO) and a read license plate number (LPN) of the vehicle (2), to the violation server (7);
in the violation server (7):
- registering (30) control vehicles (6), including positions (LOR) or the surroundings (9) thereof,
- receiving (27) violation data records (DELR) from recording vehicles (5) and, if the locations of the violations (DO) thereof are within the surroundings (9) of a position (LOC),
- providing (31 to 33) these violation data records (DELR) to a control vehicle (6) that is registered with this position (LOC) or these surroundings (9);
in the control vehicle (6):
- registering (29, 30) the position (LOC) or surroundings (9) thereof in the violation server (7),
- reading (38) the license plate number (13) of a passing vehicle (2),
- determining (41) a violation data record (DELR) provided by the violation server (7) for a read license plate number (LPN) and, if such a record exists,
- issuing (44) an alert message.

20. The control method according to claim 19 for a road toll system comprising on-board units (3), from which at least one vehicle shape-specific toll parameter (OC) can be read out via a DSRC radio interface (17, 46), **characterized by** the following steps: in the recording vehicle (5):
- reading out (22) the toll parameter (OC) of a passing vehicle (2) by means of a DSRC transceiver (11),
- detecting (20) a shape parameter (CL) of the vehicle (2) by means of a sensor (14),
- checking (24) the toll parameter (OC) for consistency with the shape parameter (CL) and, in case of inconsistency,
- transmitting (27) a violation data record (DELR), including the location of the violation (DO) and license plate number read result (LPN) of the vehicle (2), to the violation server (7).

21. The method according to claim 19 or 20, **characterized in that** the speed, and preferably the driving direction, of a passing vehicle (2) are measured in the recording vehicle (5) and the traffic or toll violation is also determined based on these measured values (v).

22. The method according to any one of claims 19 to 21, **characterized in that** the shape parameter (CL) and the toll parameter (OC) are a respective vehicle length or a respective number of vehicle axles.

23. The method according to any one of claims 19 to 22, **characterized in that** the violation data record (DELR) also contains a time stamp (DT), and the violation server (7) only takes violation data records (DELR) into consideration containing time stamps (DT) within a predetermined time period and/or the control vehicle (6) discards violation data records (DELR) containing time stamps (DT) outside a predetermined time period.

24. The method according to any one of claims 19 to 23, **characterized in that** the recording vehicle (5) measures the speed, and preferably the driving direction, of a passing vehicle (2) and adds these to the violation data record (DELR), and based thereon the violation server (7) extrapolates a temporal change of the location of the violation (DO), so as to take this into consideration when checking whether a location of a violation (DO) is within the surroundings (9) of a position (LOC) at a particular time.

## Revendications

1. Dispositif pour le contrôle dans un système de péage routier (1) basé sur des unités de bord (3) embarquées par des véhicules (2), comprenant :
au moins un véhicule de marquage (5) et au moins un véhicule de contrôle (6), lesquels comportent respectivement un dispositif de lecture (12, 39) pour la lecture d'une plaque d'immatriculation (13) du véhicule (2) et sont reliés sans fil à un serveur d'infractions central (7),
dans lequel le véhicule de marquage (5) est conçu pour détecter une infraction routière ou de péage d'une unité de bord (3) ou d'un véhicule (2) transportant celle-ci, et, en cas d'infraction, pour envoyer un ensemble de données d'infraction (DELR) avec le lieu d'infraction (DO) et le résultat de lecture d'immatriculation (LPN) du véhicule (2) au serveur d'infractions (7),
dans lequel le serveur d'infractions (7) est conçu pour enregistrer des véhicules de contrôle (6) avec des positions (LOC) ou leurs environnements (9), et pour mettre des ensembles de données d'infraction (DELR), dont les lieux d'infraction (DO) tombent dans l'environnement (9) autour d'une position (LOC), à la disposition d'un véhicule de contrôle (6) enregistré avec cette position (LOC) ou cet environnement (9), et
dans lequel le véhicule de contrôle (6) est conçu pour enregistrer sa position (LOC) ou son environnement (9) dans le serveur d'infractions (7), et pour détecter un ensemble de données d'infraction (DELR) mis à disposition par le serveur d'infractions (7) pour une immatriculation (LPN) lue par son dispositif de lecture (39), et, dans le cas où celui-ci existe, pour délivrer un message d'alerte.

2. Dispositif selon la revendication 1, pour le contrôle d'un système de péage routier avec des unités de bord (3), à partir desquelles au moins un paramètre de péage (CL) spécifique à la forme du véhicule peut être lu par le biais d'une interface radio DSRC (17, 46), **caractérisé en ce que**
le véhicule de marquage (5) comporte un émetteur-récepteur DSRC (11) pour la lecture du paramètre de péage (OC) d'un véhicule (2) en circulation, et un capteur (14) pour la détection d'un paramètre de forme (CL) du véhicule (2),
dans lequel le véhicule de marquage (5) est conçu pour vérifier la cohérence du paramètre de péage (OC) avec le paramètre de forme (CL), et, en cas d'incohérence, pour envoyer l'ensemble de données d'infraction (DELR) avec le lieu d'infraction (DO) et le résultat de lecture d'immatriculation (LPN) du véhicule (2) au serveur d'infractions (7).

3. Dispositif selon la revendication 1 ou 2, **caractérisé en ce que** le véhicule de marquage (5) est équipé d'un dispositif (11, 12, 14, 49) pour le mesurage de la vitesse et de préférence la direction de déplacement d'un véhicule (2) en circulation, afin de déterminer l'infraction routière ou de péage également sur la base de ces valeurs de mesure (v).

4. Dispositif selon l'une des revendications 1 à 3, **caractérisé par** une première multitude de véhicules de marquage (5) et une deuxième multitude de véhicules de contrôle (6), dans lequel la deuxième multitude est nettement supérieure à la première, de préférence au moins d'une puissance de dix.

5. Dispositif selon l'une des revendications 1 à 4, **caractérisé en ce que** le paramètre de forme (CL) et le paramètre de péage (OC) correspondent respectivement à une longueur de véhicule ou à un nombre d'axes.

6. Dispositif selon l'une des revendications 1 à 5, **caractérisé en ce que** le capteur (14) est un télémètre laser ou un scanner laser, lequel détecte au moins une partie de la forme du véhicule (2) par balayage (15) pendant le passage et en déduit au moins un paramètre de forme (CL).

7. Dispositif selon l'une des revendications 1 à 6, **caractérisé en ce que** l'ensemble de données d'infraction (DELR) contient également un horodatage (DT) et le serveur d'infractions (7) est conçu pour tenir compte seulement des ensembles de données d'infraction (DELR) compris dans une période prédéfinie.

8. Dispositif selon l'une des revendications 1 à 7, **caractérisé en ce que** le véhicule de marquage (5) est équipé d'un dispositif (11, 12, 14, 49) pour le mesurage de la vitesse et de la direction de déplacement d'un véhicule (2) en circulation, et enregistre ces valeurs de mesure (v) dans l'ensemble de données d'infraction (DELR), et **en ce que** le serveur d'infractions (7) est conçu pour extrapoler un changement temporel du lieu d'infraction (DO) à partir desdites valeurs de mesure (v), afin de le prendre en compte lors de la vérification de l'inclusion d'un lieu d'infraction (DO) dans l'environnement (9) d'une position (LOC) à un moment donné.

9. Véhicule de marquage (5) pour un dispositif de contrôle selon l'une des revendications 1 à 8, **caractérisé par**
un dispositif de communication pour une communication sans fil avec un serveur d'infractions (7) central,
un émetteur-récepteur DSRC (11) pour la lecture d'un paramètre de péage (OC) spécifique à la forme d'un véhicule (2) en circulation,
un capteur (14) pour la détection d'un paramètre de forme (CL) du véhicule (2), et
un dispositif de lecture (12) pour la lecture d'une plaque d'immatriculation (13) du véhicule (2),
dans lequel le véhicule de marquage (5) est conçu pour vérifier la cohérence du paramètre de péage (OC) avec le paramètre de forme (CL) et, en cas d'incohérence, pour envoyer un ensemble de données d'infraction (DELR) avec le lieu d'infraction (DO) et le résultat de lecture d'immatriculation (LPN) du véhicule (2) au serveur d'infractions (7).

10. Véhicule de marquage selon la revendication 9, **caractérisé en ce que** le capteur (14) est un scanner laser, lequel détecte au moins une partie de la forme d'un véhicule (2) par balayage pendant la circulation et en déduit au moins un paramètre de forme (CL).

11. Véhicule de marquage selon la revendication 9 ou 10, **caractérisé en ce qu'**il est équipé d'un dispositif pour la détermination du lieu d'infraction (DO), de préférence un récepteur de navigation par satellite.

12. Véhicule de marquage selon l'une des revendications 9 à 11, **caractérisé en ce qu'**il est équipé d'un dispositif (11, 12, 14, 49) pour le mesurage de la vitesse et de préférence de la direction de déplacement d'un véhicule (2) en circulation, et enregistre ces valeurs de mesure (v) dans l'ensemble de données d'infraction (DELR).

13. Serveur d'infractions pour un dispositif de contrôle selon l'une des revendications 1 à 8, **caractérisé par**
un dispositif de communication pour la communication sans fil avec des véhicules de marquage (5) et des véhicules de contrôle (6),
le serveur d'infractions (7) étant conçu pour
- recevoir des ensembles de données d'infraction (DELR) transmis par des véhicules de marquage (5) et les enregistrer,
- enregistrer des véhicules de contrôle (6) avec des positions (LOC) ou leurs environnements (9), et
- mettre des ensembles de données d'infraction (DELR) dont les lieux d'infraction (DO) tombent dans l'environnement (9) autour d'une position (LOC) à la disposition d'un véhicule de contrôle (6) enregistré avec cette position (LOC) ou cet environnement (9).

14. Serveur d'infractions selon la revendication 13, **caractérisé en ce que** l'ensemble de données d'infraction (DELR) contient également un horodatage (DT) et **en ce que** le serveur d'infractions (7) est conçu pour tenir compte seulement d'ensembles de données d'infraction (DELR) inclus dans une période prédéfinie.

15. Serveur d'infractions selon la revendication 13 ou 14, **caractérisé en ce que** l'ensemble de données d'infraction (DELR) contient également des valeurs de mesure (v) quant à la vitesse et la direction de déplacement, et **en ce que** le serveur d'infractions (7) est conçu pour extrapoler un changement temporel du lieu d'infraction (DO) à partir desdites valeurs de mesure (v), afin de le prendre en compte lors de la vérification de l'inclusion d'un lieu d'infraction (DO) dans l'environnement (9) d'une position (LOC) à un moment donné.

16. Véhicule de contrôle (6) pour un dispositif de contrôle selon l'une des revendications 1 à 8, **caractérisé par**
un dispositif de communication pour la communication sans fil avec un serveur d'infractions (7) central,
un dispositif pour l'enregistrement de sa position (LOC) ou de son environnement (9) dans le serveur d'infractions (7), et
un dispositif de lecture (39) pour la lecture d'une plaque d'immatriculation (13) d'un véhicule (2) en circulation,
le véhicule de contrôle (6) étant conçu pour détecter un ensemble de données d'infraction (DELR) mis à disposition par le serveur d'infractions (7) pour une immatriculation (LPN) lue et, dans le cas où celui-ci existe, pour délivrer un message d'alerte.

17. Véhicule de contrôle selon la revendication 16, **caractérisé en ce que** l'ensemble de données d'infraction (DELR) contient également un horodatage (DT) et **en ce que** le véhicule de contrôle (6) est conçu pour rejeter les ensemble de données d'infraction (DELR) en dehors d'un période prédéfinie.

18. Véhicule de contrôle selon la revendication 16 ou 17, **caractérisé en ce qu'**il est équipé d'un dispositif pour la détermination de sa position (LOC), de préférence un récepteur de navigation par satellite, pour l'enregistrement de celle-ci dans le serveur d'infractions (7).

19. Procédé pour le contrôle dans un système de péage routier (1) basé sur des unités de bord (3) embarquées par des véhicules (2), à l'aide d'au moins un véhicule de marquage (5) et d'au moins un véhicule de contrôle (6) capables de communiquer sans fil avec un serveur d'infractions (7) central, comprenant :
dans le véhicule de marquage (5) :
- la détection (20, 22) d'une infraction routière ou de péage d'une unité de bord (3) ou d'un véhicule (2) transportant celle-ci, et, en cas d'infraction,
- l'envoi (27) d'un ensemble de données d'infraction (DELR) avec un lieu d'infraction (DO) détecté et une immatriculation (LPN) lue du véhicule (2) au serveur d'infractions (7) ;
dans le serveur d'infractions (7) :
- l'enregistrement (30) de véhicules de contrôle (6) avec des positions (LOC) ou leurs environnements (9),
- la réception (27) d'ensembles de données d'infraction (DELR) de véhicules de marquage (5), et, si leurs lieux d'infraction (DO) tombent dans l'environnement (9) autour d'une position (LOC) ;
- la mise à disposition (31-33) de ces ensembles de données d'infraction (DELR) pour un véhicule de contrôle (6) enregistré avec cette position (LOC) ou cet environnement (9) ;
dans le véhicule de contrôle (6) :
- l'enregistrement (29, 30) de sa position (LOC) ou de son environnement (9) dans le serveur d'infractions (7),
- la lecture (38) d'une plaque d'immatriculation (13) d'un véhicule (2) en circulation,
- la détection (41), pour une immatriculation (LPN) lue, d'un ensemble de données d'infraction (DELR) mis à disposition par le serveur d'infractions (7) et, dans le cas où celui-ci existe,
- la délivrance (44) d'un message d'alerte.

20. Procédé selon la revendication 19, pour le contrôle d'un système de péage routier avec des unités de bord (3), à partir desquelles au moins un paramètre de péage (OC) spécifique à la forme du véhicule peut être lu par le biais d'une interface radio DSRC (17, 46), **caractérisé par**
dans le véhicule de marquage (5) :
- lecture (22) du paramètre de péage (OC) d'un véhicule (2) en circulation au moyen d'un un émetteur-récepteur DSRC (11),
- détection (20) d'un paramètre de forme (CL) du véhicule (2) au moyen d'un capteur (14),
- vérification (24) de la cohérence du paramètre de péage (OC) avec le paramètre de forme (CL), et, en cas d'incohérence,
- envoi (27) de l'ensemble de données d'infraction (DELR) avec le lieu d'infraction (DO) et le résultat de lecture d'immatriculation (LPN) du véhicule (2) au serveur d'infractions (7).

21. Procédé selon la revendication 19 ou 20, **caractérisé en ce que** la vitesse et de préférence la direction de déplacement d'un véhicule (2) en circulation sont mesurées dans le véhicule de marquage (5), et l'infraction routière ou de péage est également déterminée sur la base de ces valeurs de mesure (v).

22. Procédé selon l'une des revendications 19 à 21, **caractérisé en ce que** le paramètre de forme (CL) et le paramètre de péage (OC) correspondent respectivement à une longueur de véhicule ou à un nombre d'axes.

23. Procédé selon l'une des revendications 19 à 22, **caractérisé en ce que** l'ensemble de données d'infraction (DELR) contient également un horodatage (DT), et seuls des ensembles de données d'infraction (DELR) présentant un horodatage (DT) inclus dans une période prédéfinie sont pris en compte dans le serveur d'infractions (7), et/ou les ensembles de données d'infraction (DELR) présentant un horodatage (DT) tombant en dehors d'une période prédéfinie sont rejetés dans le véhicule de contrôle (6).

24. Procédé selon l'une des revendications 19 à 23, **caractérisé en ce que** la vitesse et de préférence la direction de déplacement d'un véhicule (2) en circulation sont mesurées dans le véhicule de marquage (5) et admises dans l'ensemble de données d'infraction (DELR), un changement temporel du lieu d'infraction (DO) étant extrapolé à partir de celles-ci dans le serveur d'infractions (7), pour tenir compte de celui-ci lors de la vérification de l'inclusion d'un lieu d'infraction (DO) dans l'environnement (9) d'une position (LOC) à un moment donné.
